# EUROPÄISCHE PATENTSCHRIFT

(11) **EP 0 864 048 B1**
(45) Veröffentlichungstag und Bekanntmachung des Hinweises auf die Patenterteilung: **15.09.1999**
(21) Anmeldenummer: 96937966.8
(22) Anmeldetag: 26.11.1996
(51) Int. Cl.: F16B 7/04

(54) **KLEMMVORRICHTUNG ZUM LÖSBAREN VERBINDEN ZWEIER PROFILSTÜCKE**
CLAMPING DEVICE FOR DETACHABLY CONNECTING TWO PROFILED PARTS
DISPOSITIF DE SERRAGE POUR L'ASSEMBLAGE DEMONTABLE DE DEUX PIECES PROFILEES

(30) Priorität: 28.11.1995 CH 337795
(43) Veröffentlichungstag der Anmeldung: 16.09.1998
(73) Patentinhaber: SYMA INTERCONTINENTAL AG, CH-9533 Kirchberg (CH)
(72) Erfinder: STRÄSSLE, Marcel, CH-9533 Kirchberg (CH); ZÜLLIG, Kurt, CH-9533 Kirchberg (CH)
(74) Vertreter: Liebetanz, Michael, Dipl.-Phys.
(86) Internationale Anmeldenummer: CH9600415
(87) Internationale Veröffentlichungsnummer: WO9720148

(56) Entgegenhaltungen:
- WO-A-93/25820
- FR-A- 2 152 941

## Beschreibung

Die vorliegende Erfindung betrifft eine Klemmvorrichtung zum lösbaren Verbinden zweier Profilstücke gemäss dem Oberbegriff des Patentanspruchs 1.

Eine aus der CH-A-576 591 bekannte Klemmvorrichtung dient zur Verbindung der Profilstücke von demontierbaren Gestellen und/oder Wänden. Zu diesem Zweck ist ein längsverschiebbarer in einem Einsatzkern geführter Bolzen vorgesehen, der an seinem Kopfende T-förmig ausgebildet ist, um einen Schlitz eines anderen Profilstückes zu hintergreifen. Die Längsverschiebung des Bolzens wird dadurch erreicht, dass eine Schraube mit einer konischen Spitze exzentrisch gegen eine als Anzugsfläche dienende konische Ausnehmung im Bolzen gedrückt wird.

Eine andere Klemmvorrichtung dieser Art ist aus der EP-B1-0 506 607 bekannt. Bei dieser Klemmvorrichtung weist der Bolzen Tragmittel zur schwenkbaren Lagerung von mehreren Haltestükken auf, wobei jedes Haltestück und die Innenwände des Einsatzkerns ein System von Gleitflächen umfassen, um bei einer axialen Bewegung des Bolzens eine Schwenkung der Haltestücke zu bewirken. Die freien Endbereiche der Haltestücke sind jeweils hakenförmig ausgebildet, um beim Schwenken den gewünschten Klemmdruck auszuüben.

Eine weitere Klemmvorrichtung dieser Art ist aus der EP-B1-0 123 683 bekannt. Bei dieser Klemmvorrichtung wird der Ankerbolzen dadurch gesichert, dass er durch eine Stange mit einem erweiterten Endteil verlängert ist und dass der Einsatzkern mit Spreizfingern versehen ist und nach innen ragende Nocken aufweist, um den erweiterten Endteil zu hintergreifen. Eine solche Schnappsicherung kann auch durch eine einstückig angeformte Hülse mit wenigstens einem Längsschlitz realisiert werden, in dem ein in der Stange diagonal angeordneter Stift geführt ist.

Ferner beschreibt die FR-PS-2.152.941 eine Vorrichtung mit Halteelementen, die um eine ortsfest im Gehäuse angeordnete Achse drehbar gelagert sind. Diese Vorrichtung hat keinen Bolzen und keine Schraube, die über Gleitflächen in den Bolzen eingreift, sondern die Halteelemente werden vielmehr durch einen Exzenter geschwenkt, dessen Höhe der Breite des Gehäuses entspricht. Das Gehäuse hat keine Gleitflächen, die bei einer axialen Bewegung der Halteelemente die Schwenkung derselben bewirken, sondern die Gleitflächen befinden sich im Exzenter und im unteren Bereich der Halte-elemente oder eines die Halteelemente verschiebenden Druckstückes.

Es ist nun Aufgabe der vorliegenden Erfindung, eine verbesserte Klemmvorrichtung der eingangs erwähnten Art zu schaffen.

Diese Aufgabe wird erfindungsgemäss durch eine Klemmvorrichtung mit den im kennzeichnenden Teil des Patentanspruchs 1 angegebenen Merkmalen gelöst.

Weitere vorteilhafte Ausgestaltungen der Erfindung sind in den abhängigen Ansprüchen angegeben.

Die Erfindung wird nachfolgend beispielsweise anhand einer Zeichnung näher erläutert. Es zeigen:
- Figur 1: eine Schnittdarstellung durch die Exzenterachse einer erfindungsgemässen Klemmvorrichtung mit Einsatzkern im geschlossenen Zustand,
- Figur 2: eine Draufsicht auf einen Teil dieser Klemmvorrichtung und auf deren Schieber,
- Figur 3: eine Schnittsdarstellung der Exzenterpartie dieser Klemmvorrichtung in einer Ebene quer zur Längsachse,
- Figuren 4 und 5: Darstellungen einer Variante eines solchen Schiebers,
- Figuren 6 bis 8: Darstellungen eines Einsatzkerns,
- Figuren 9 und 10: Darstellungen eines federnden Verriegelungsblechs seitlich und von oben,
- Figur 11: eine Draufsicht auf eine weitere Ausführung der erfindungsgemässen Klemmvorrichtung mit speziellen Klinken,
- Figur 12: eine Schnittdarstellung durch die Exzenterachse dieser Ausführung,
- Figur 13: eine Draufsicht auf das untere Gehäuseteil dieser Ausführung,
- Figur 14: eine Schnittdarstellung nach Linie A-A in Figur 13,
- Figur 15: eine Draufsicht auf das obere Gehäuseteil dieser Ausführung,
- Figur 16: eine Schnittdarstellung nach Linie B-B in Figur 15,
- Figur 17: eine Schnittdarstellung eines Exzenters zu dieser Ausführung,
- Figur 18: eine Draufsicht auf einen solchen Exzenter,
- Figur 19: eine Ansicht einer solchen speziellen Klinke,
- Figur 20: eine schematische Darstellung eines schlittenförmigen Schiebers mit einem einseitig abgebogenem Hammerkopf als Klemmelement,
- Figur 21: eine schematische Darstellung eines schlittenförmigen Schiebers mit einem beidseitig abgebogenem Hammerkopf als Klemmelement,
- Figuren 22 und 23: Darstellungen einer weiteren Ausführung eines federnden Verriegelungsblechs seitlich und von oben,
- Figur 24: eine Schnittdarstellung der Exzenterpartie in einer Klemmvorrichtung mit einem Verriegelungsblech nach den Figuren 22, 23 in einer Ebene quer zur Längsachse,
- Figuren 25 und 26: perspektivische Darstellungen weiterer Varianten eines Schiebers, und
- Figuren 27 und 28: Darstellungen von zwei weiteren Ausführungen der speziellen Klinken.

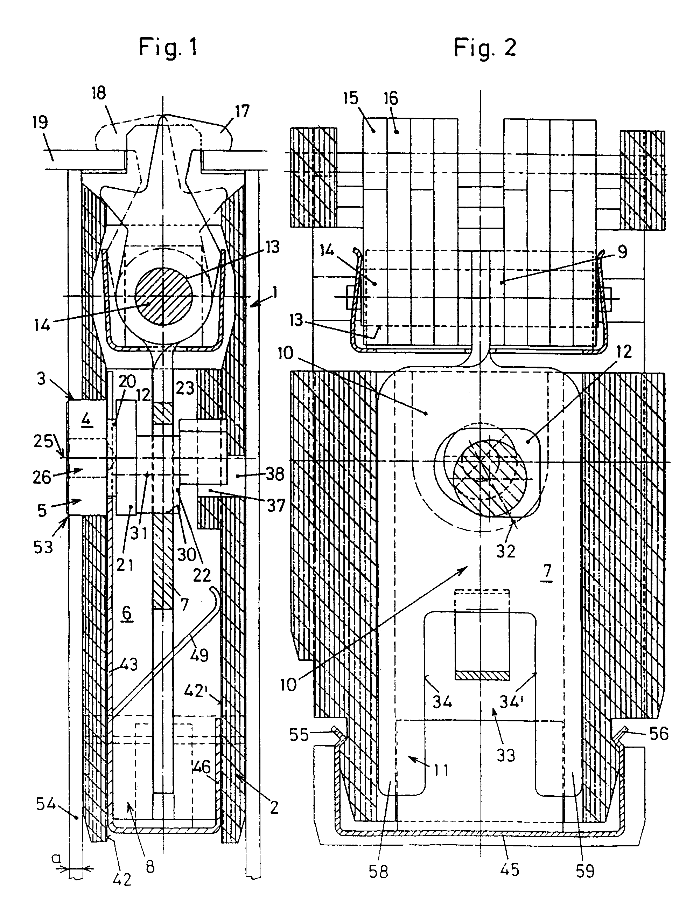

Figur 1 zeigt einen in ein erstes Profilstück 1 eingeschobenen und arretierten Einsatzkern 2, vorzugsweise aus einem Leichtmaterial wie Kunststoff oder Aluminium. Der Einsatzkern 2 ist mit einer Querbohrung 3 zur Aufnahme des Kopfes 4 eines Exzenters 5 und mit einem länglichen Innenraum, auch Innenkanal 6 genannt, zur Aufnahme eines vorzugsweise nichtelastischen bzw. starren Ankers oder Schiebers 7 versehen, der nach einem Druckgussverfahren oder auch als Stanzteil hergestellt werden kann.

Das Profilstück 1 und der Einsatzkern 2 können beispielsweise ähnlich den entsprechenden in der CH-A-576 591 oder EP-B1-0 506 607 oder EP-B1-0 123 683 beschriebenen Elementen sein.

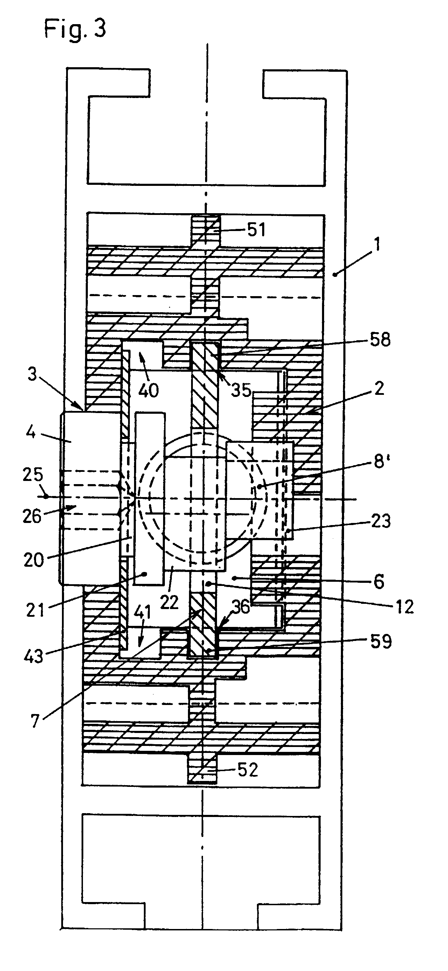

Der Anker 7 ist im Kanal 6 verschiebbar gelagert, wobei auch eine in Figur 3 nur angedeutete Schraubenfeder oder Druckfeder 8' im inneren Endbereich 8 des Kanals 6 untergebracht sein kann.

Figur 2 zeigt, dass der Schieber 7 breit und flach ausgebildet ist und drei Partien aufweist, nämlich eine obere Kupplungspartie 9, eine mittlere Exzenterpartie 10 und eine untere Bodenpartie 11, und dass die Exzenterpartie 10 eine unsymmetrische Aussparung 12 aufweist. Die Kupplungspartie 9 kann eine etwa schwertförmig verlängerte um 90° gedrehte Lasche mit einer Bohrung 13 (Fig. 1) für eine Welle 14 sein, die zur schwenkbaren Lagerung von Haltestücken oder Klinken 15, 16 dient. Solche Haltestücke sind an sich aus der EP-B1-0 506 607 bekannt und weisen eine Nase 17, 18 (Fig. 1) auf, die in eine Öffnung eines Profilstücks 19 einfügbar ist, um einen Klemmdruck gegen eine Partie dieses Profilstücks 19 auszuüben, die die Öffnung teilweise abschliesst, wobei diese Klinken 15, 16 vorzugsweise flach und alternierend mit der Nase 17, 18 in der einen oder der anderen Richtung gestapelt sind, und zwar gleichmässig beiderseits der Kupplungspartie 9 verteilt.

Der Exzenter 5 der Klemmvorrichtung weist einen Exzenterkopf 4 mit Durchmesser D, einen Exzenterhals 20 und einen Exzenterflansch 21 auf, die vorzugsweise konzentrisch ausgebildet sind. Zudem weist der Exzenter eine exzentrisch zum Exzenterkopf 4 angeordnete Exzenterwalze 22 mit Durchmesser d und eine mit dem Exzenterkopf koaxiale Exzenteranschlagwalze 23 mit Nenn-Durchmesser d' auf, wobei D > d und d ≅ d' ist. Der Exzenterhals 20 kann durch eine Einschnürung im Exzenterkopf 4 gebildet sein.

Die Figuren 1 und 3 zeigen im Querschnitt die Aussparung 12, die sich im mittleren Bereich der Exzenterpartie 10 des Schiebers 7 befindet. Diese Aussparung 12 ist speziell ausgestaltet, um die Exzenterwalze 22 aufzunehmen und mit ihr beim Verschieben des Ankers 7 zusammenzuwirken.

Die Figuren 1 und 2 zeigen die Klemmvorrichtung in einer geschlossenen Lage, bei der der Schieber 7 eingezogen, das heisst nach innen gestreckt ist und die Haltestücke 15, 16 sich in einer geschwenkten Position befinden, bei der die Nasen 17, 18 das Profilstück 19 hintergreifen. Der runde Exzenterkopf 4 ist um seine Achse 25 drehbar in der Bohrung 3 des Einsatzkerns 2 gelagert und weist einen konzentrischen Innenvier- oder sechskant 26 oder andere Drehmittel auf, um ihn mit Hilfe eines Schlüssels zu schwenken.

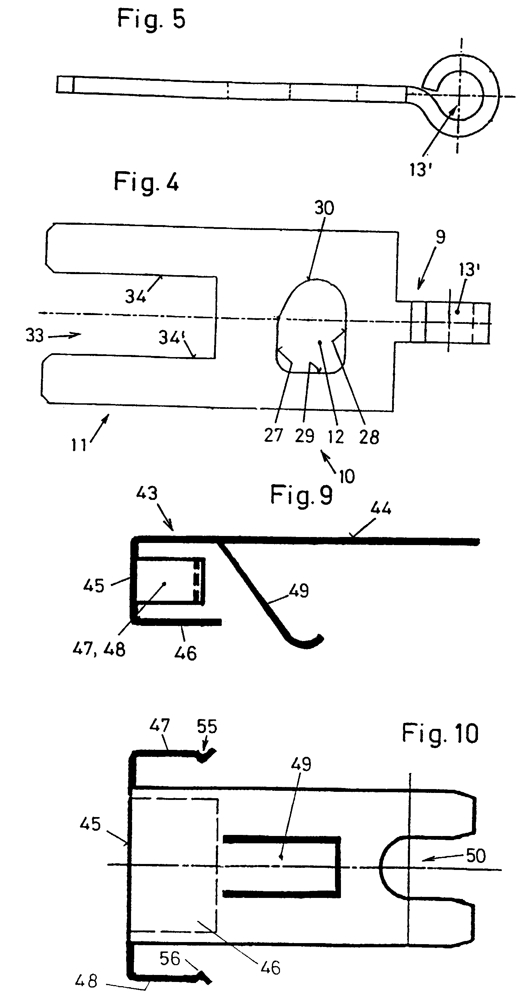

Figur 4 zeigt anhand einer Variante des Schiebers 7, dass die durchgehende Ausnehmung 12 zumindest angenähert durch zwei nahezu parallele Randwände 27, 28, eine untere Randwand 29, die parallel zur Längsachse des Ankers und etwa senkrecht zu den Wänden 27, 28 verläuft, und eine obere Randwand 30 begrenzt ist, die im rechten Bereich nahe der Kupplungspartie 9 bogenförmig und im linken Bereich schräg ausgebildet ist. Die Wände 27 bis 30 erstrecken sich senkrecht zur flachen Ebene des Schiebers 7.

Die Achse 25 des Exzenterkopfs 4 und die Achse 31 der Exzenterwalze 22 definieren eine um die Achse 25 schwenkbare Ebene 32 (Fig. 2), die beim Schliessen der Klemmvorrichtung sich im Uhrzeigersinn bewegt, um den Schieber 7 einzuziehen, das heisst nach unten zu drücken, und zwar im wesentlichen ohne ihn zu drehen.

In der Bodenpartie 11 des Schiebers 7 ist eine relativ breite Einbuchtung 33 vorhanden, deren Wände 34, 34' parallel zur Längsachse des Ankers 7 verlaufen und die unter anderem auch zur Aufnahme oder Führung einer Druckfeder dienen können.

In der Variante nach den Figuren 4 und 5 ist die Kupplungspartie 9 des Schiebers 7 nicht wie in der Ausführung nach Figuren 1 und 2 um 90° axial gedreht, sondern um etwa 360° um eine quer zur Verschiebungsrichtung verlaufende Achse gebogen, um eine Öffnung 13' statt einer Bohrung 13 zu bilden.

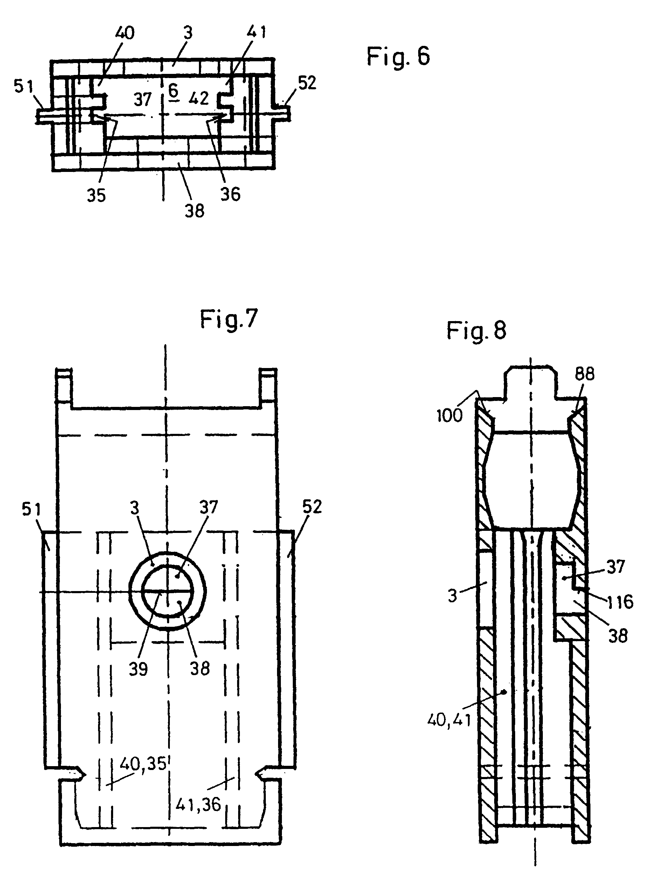

Der Einsatzkern 2 kann einstückig oder durch zwei aneinander angepasste flache Schalen ausgebildet sein, die miteinander geklebt oder mit Schrauben befestigt sind. In den Figuren 6 bis 8 ist beispielsweise ein einstückiger Einsatzkern in Form eines länglichen Parallelepipeds dargestellt. Der Innenkanal 6 des Einsatzkerns 2 weist zwei längliche, vorzugsweise mittige, Nuten 35, 36 auf, die als Führung für die flachen Randpartien 58, 59 des Schiebers 7 dienen.

An der einen breiten Seite des Einsatzkerns 2 befindet sich die Querbohrung 3, in der der Exzenterkopf 4 drehbar gelagert ist. Koaxial mit der Querbohrung 3 ist an der gegenüberliegenden breiten Seite des Einsatzkerns 2 eine runde Ausnehmung 37 vorhanden, in der die Exzenteranschlagwalze 23 gedreht werden kann. Die runde Ausnehmung 37 (Fig. 8) kommuniziert mit einer weiteren Ausnehmung 38, die etwa einen halbmondförmigen Querschnitt aufweist und durch eine Ebene 39 begrenzt ist, die sich in einem kleinen Abstand zur Achse 25 befindet und senkrecht zur Bewegungsachse des Schiebers 7 verläuft. Im Innern des Einsatzkerns nach den Figuren 3 oder 6 sind auch zwei weitere Nuten 40, 41 vorhanden, die mit dem Innenkanal 6 kommunizieren und parallel zu den Nuten 35, 36 verlaufen. Die Nuten 35 und 40 befinden sich im Bereich zwischen der Bewegungsachse des Schiebers und der einen schmalen Seite des Einsatzkerns und die Nuten 36, 41 im Bereich zwischen der Bewegungsachse und der anderen schmalen Seite desselben. Die oberen Wände der Nuten 40 und 41 sind gemäss Figur 6 als Verlängerungen der grossen Innenwand 42 des Einsatzkerns vorgesehen, um eine erweiterte Gleitfläche für ein federndes Verriegelungsblech 43 (Fig. 1) zu bilden. Bei einer anderen Dimensionierung des Einsatzkerns und/oder des Verriegelungsblechs 43 könnte man auch ohne diese Nuten 40, 41 auskommen.

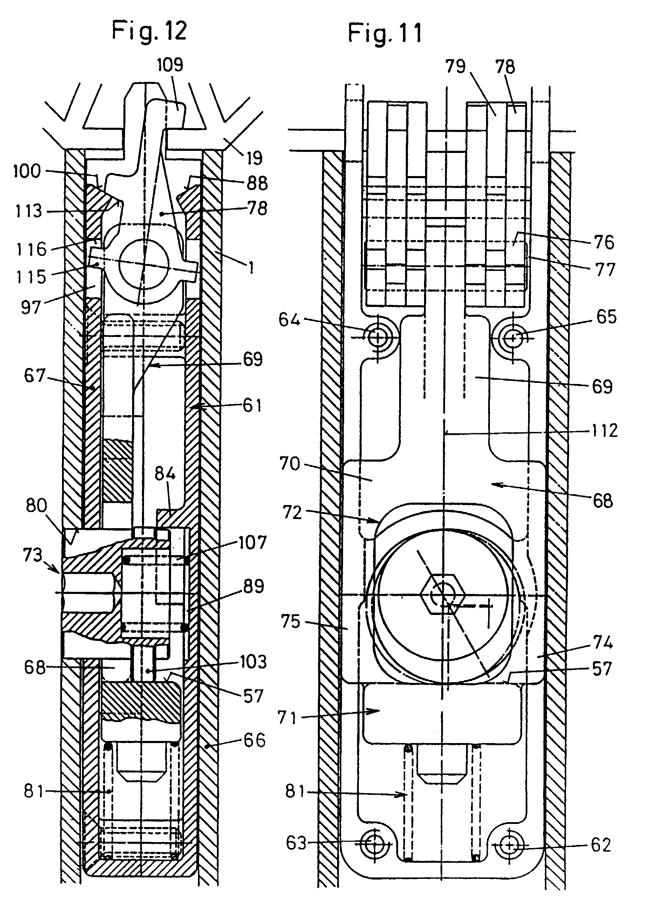

Aus den Figuren 9 und 10 ist ersichtlich, dass das Verriegelungsblech 43 ein U-förmig abgewinkeltes Ende mit einem senkrecht zu einer Gleitebene 44 verlaufenden Querstreifen 45 und einer parallel zur Gleitebene 44 verlaufenden Lasche 46 aufweist, und dass der Querstreifen 45 zwei seitlich abgewinkelte senkrecht zur Gleitebene 44 des Verriegelungsblechs 43 verlaufende Laschen 47, 48 umfasst.

Das Verriegelungsblech 43 weist eine längliche durch einen U-förmigen Einschnitt gebildete Zunge oder Lamelle 49 auf, die nach unten gedrückt ist, und zwar bis unterhalb des durch die Laschen 46, 47, 48 definierten Raums, um einen Federfinger zu bilden. Der dem Querstreifen 45 gegenüberliegende Endbereich des Verriegelungsblechs 43 weist eine vorzugsweise mittige gabelartige Öffnung 50 in Form eines offenen Langlochs auf, dessen Oberfläche daher durch einen Halbkreis und etwa ein Rechteck definiert ist.

In den Figuren 6, 7, 8 ist beispielsweise ein erfindungsgemässer Einsatzkern dargestellt, der an dessen schmalen Längsseiten je eine vorzugsweise mittige Rippe 51, 52 aufweist, um eine gleitende Nut-Feder-Verbindung mit einem entsprechenden Profilstück zu bilden. Bei anderen Varianten können diese Rippen entfallen. In der Ausführung nach Figur 3 dienen diese Rippen 51, 52 zur Verhinderung von seitlichen Bewegungen des Einsatzkerns innerhalb des Profilstücks.

Die erfindungsgemässe Klemmvorrichtung nach den Figuren 1 bis 10 funktioniert folgendermassen:

Die Verriegelungsfeder 43 (Fig. 9, 10) kann vollständig im Innenkanal 6 des Einsatzkerns 2 untergebracht werden, derart, dass die äussere Gleitebene 44 die breite innere Wand 42 (Fig. 6) des Einsatzkerns 2 berührt, an der sich die Querbohrung 3 befindet, dass der Querstreifen 45 sich im Bodenbereich (Fig. 2) des Einsatzkerns 2 befindet und dass die Lasche 46 die andere breite Innenwand 42' (Fig. 1) des Einsatzkerns 2 im Bereich der Öffnung 8 berührt, wobei dann die Federzunge 49 eine Kraft entwickelt, die die Gleitebene 44 gegen die Wand 42 des Einsatzkerns 2 drückt. Im montierten Zustand ist der Exzenterhals 20 in die Öffnung 50 eingefügt, so dass die Ränder dieser Öffnung wegen der Federkraft der Federzunge 49 den Exzenterkopf 4 unverlierbar nach aussen drükken, indem die Verriegelungsfeder 43 gleichzeitig verschiebbar bezüglich des Exzenters 5 ist.

Um nun die Klemmvorrichtung in das eine Profilstück 1 aufnehmen zu können, müssen die Klinken 15, 16,... nach aussen, das heisst gemäss Figur 1, nach oben gezogen werden, indem durch Drehen des Exzenterkopfes eine Lage gesucht wird, bei der das halbmondförmige Ende der Exzenteranschlagwalze 23 die halbmondförmige Ausnehmung 38 des Einsatzkerns 2 überdeckt. In diesem Moment kann durch einen mit den Fingern oder einem Werkzeug ausgeübten Druck auf die Stirnfläche des Exzenterkopfes 4 der Exzenter 5 mindestens so weit in den Einsatzkern eingeführt werden, bis die Oberfläche des Exzenterkopfes 4 bündig mit der Oberfläche des Einsatzkerns ist, weil durch diesen Druck das halbmondförmige Ende der Exzenteranschlagwalze 23 in die komplementäre halbmondförmige Ausnehmung 38 des Einsatzkerns 2 eingeführt wurde.

In dieser Position kann der Einsatzkern 2 in das Profilstück 1 aufgenommen und darin so weit gebracht werden, bis der Exzenterkopf 4 wegen der Ferderkraft der Federzunge 49 durch eine entsprechende runde Öffnung 53 im Profilstück 1 herausgedrückt und somit arretiert wird. Nach der Arretierung befindet sich die Klemmvorrichtung in einer Arbeitslage.

Beim Drehen des Exzenterkopfes 4 mit Hilfe eines Schlüssels drückt die Exzenterwalze 22 gegen den schrägen Teil der Wand 30 der Aussparung 12 und dadurch auch den Schieber 7 nach unten, wodurch sich die Klinken 15, 16,... spreizen, und die Klemmvorrichtung schliesst. Zum Öffnen wird der Exzenterkopf 4 in die andere Drehrichtung gedreht, bei der die Spreizwirkung der Klinken nachlässt, und die Klinken können aus dem Profilstück 19 herausgezogen werden. Die Arbeitsweise der Klinken ist gleich wie bei der Klemmvorrichtung nach der EPB1-0 506 607. Die Kupplungspartie 9 kann auch mit einem T-förmig ausgebildeten Kopfende wie bei der Klemmvorrichtung nach der CH-A-576 591 ausgestaltet sein. Der Einsatzkern 2 und/oder die anderen Partien des Schiebers können sonst ähnlich wie bei irgendeiner der Vorrichtungen nach den eingangs erwähnten Patentschriften sein.

Aus den Figuren 1 und 3 ist ersichtlich, dass die Höhe der Exzenterwalze 22 grösser als die Summe der Dicke des Schiebers 7 und der Dicke a der entsprechenden Wand 54 des Profilstücks 1 ist, an der die Klemmvorrichtung arretiert wird. In Figur 1 entspricht die Orientierung der Federzunge 49 dem schrägen Bruchstrich "/". Diese Federzunge 49 könnte auch umgekehrt, nämlich wie ein Trenn-Schrägstrich "\" ausgebildet sein.

Um die Verriegelungsfeder 43 unverlierbar zu halten, sind die Enden 55, 56 der Laschen 47, 48 abgewinkelt, so dass sie sich in entsprechenden parallel zur Achse 25 verlaufenden äusseren Nuten des Einsatzkerns 2 einklemmen können.

Bei der Variante der erfindungsgemässen Klemmvorrichtung nach den Figuren 11 und 12 umfasst der Einsatzkern 61 zwei durch vier Schrauben 62, 63, 64, 65 verbundene längliche Schalen 66, 67, die das Gehäuse der Klemmvorrichtung bilden. Zwischen den Schalen .66, 67 ist ein in Längsrichtung verschiebbarer Schieber 68 untergebracht, der ebenfalls eine Kupplungspartie 69, eine Exzenterpartie oder Verriegelungspartie 70 und eine Bodenpartie 71 aufweist. Die Exzenterpartie 70 weist eine durchgehende Aussparung 72 auf, durch die ein Exzenter 73 geführt ist. Die Exzenterpartie 70 ist mindestens teilweise plattenförmig mit zwei parallelen flachen Seitenrändern oder Randpartien 74, 75 ausgestaltet, die in entsprechende als Schlitze oder Nuten des Gehäuses ausgebildete Ausnehmungen verschiebbar aufgenommen sind. Die Kupplungspartie 69 ist mit einer Querbohrung 76 versehen, um eine Welle 77 zu haltern, die die Klinken 78, 79 trägt. Die obere Schale 67 hat eine runde Querbohrung 80 für die drehbare Lagerung des Exzenters 73. Zwischen dem Boden des Gehäuses und der Bodenpartie 71 des Schiebers ist eine Schraubenfeder 81 eingespannt, die den Schieber 68 nach aussen drückt.

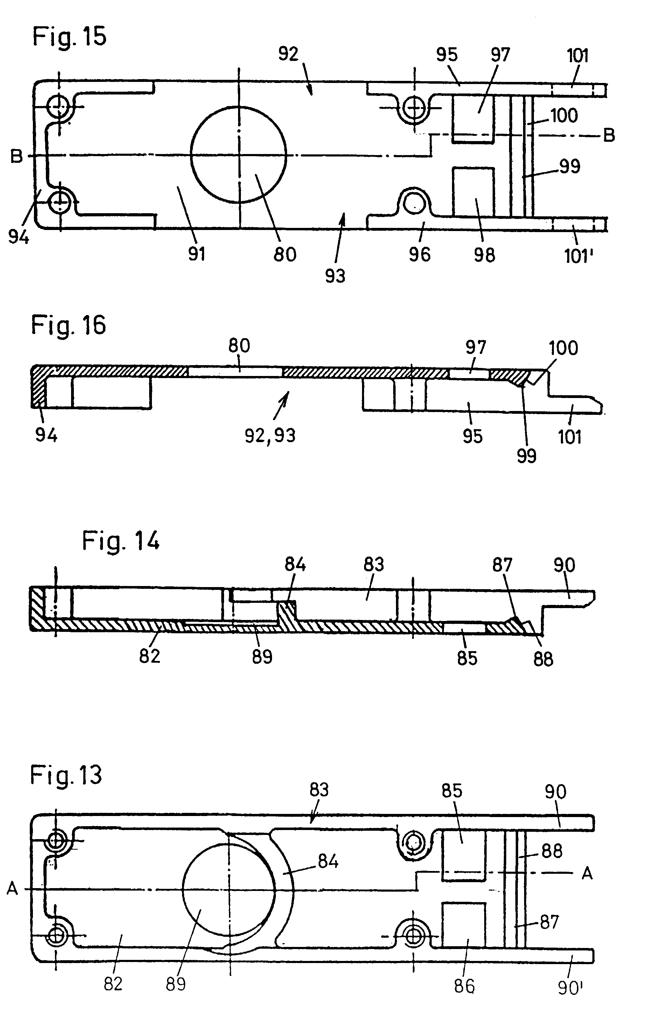

Die untere Schale nach den Figuren 13 und 14 weist eine breite Gehäusewand 82 auf, die von einer langen dünnen U-förmigen rippenartigen schmalen Seitenwand 83 umrandet ist. Die zwei längeren Partien der Seitenwand sind durch eine bogenförmige Rippe 84 verbunden, die in der Höhe niedriger als die Seitenwand 83 ist. Die Gehäusewand 82 weist im Bereich der Klinken zwei rechteckförmige Öffnungen 85, 86, auf, und ihr Endbereich ist in Form einer erhöhten Kante 87 ausgebildet, die mit einer Rampe 88 endet. Die Gehäusewand 82 weist eine kleine Vertiefung 89 auf, die durch einen teilweise tangent zur bogenförmigen Rippe 84 verlaufenden Kreis begrenzt ist. Die freien Enden der U-förmigen Seitenwand 83 können je eine schmale schwertartige Erweiterung 90, 90' zum Schutz der Klinken aufweisen. Die U-förmige Seitenwand 83 hat vier Erweiterungen mit Gewindelöchern für die Schrauben 62, 63, 64, 65 (Fig. 11).

Die obere Schale nach den Figuren 15 und 16 besteht im wesentlichen aus einer breiten Gehäusewand 91 und einer rippenartigen Umrandung mit zwei Unterbrechungen 92, 93, die eine dünne U-förmige rippenartige den Boden der Klemmvorrichtung bildende schmale Seitenwand 94 und zwei gerade rippenartige Stücke 95, 96 im Bereich der Klinken abgrenzen. In der oberen Schale befindet sich die lichte Öffnung 80 (Fig. 12) für den Exzenter 73. Die Gehäusewand 91 weist im Bereich der Klinken zwei rechteckförmige Öffnungen 97, 98 auf, und ihr Endbereich ist in Form einer Verdickung mit einer Kante 99 und einer Rampe 100 ausgebildet. Die rippenartige Umrandung hat vier Erweiterungen mit Löchern für die Schrauben 62, 63, 64, 65 (Fig. 11). Die freien Enden der geraden rippenartigen Stücke 95, 96 können je eine schmale schwertartige Erweiterung 101, 101' aufweisen, um zusammen mit den Erweiterungen 90, 90' die Klinken seitlich abzudecken.

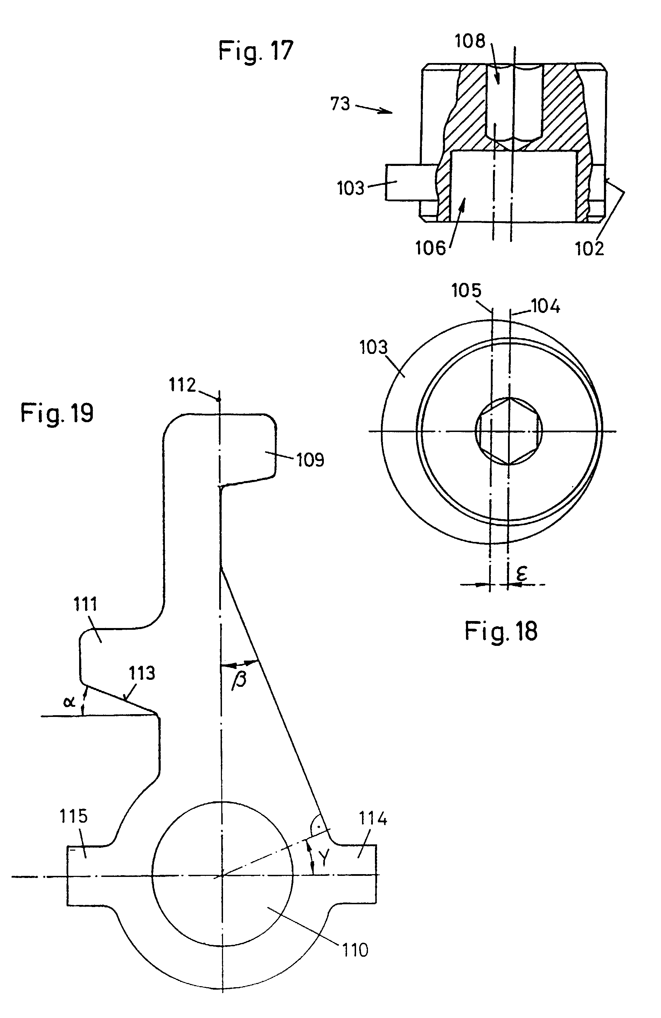

Der Exzenter 73 nach den Figuren 17 und 18 hat im wesentlichen drei zylindrische Bereiche mit einer gemeinsamen Mantellinie 102 und mit von oben nach unten abnehmenden Höhen. Der mittlere Bereich, der einen grösseren Durchmesser als die zwei anderen aufweist, bildet eine Exzenterwalze 103 mit einer Exzentrizität ε zwischen der Achse 104 des Exzenters 73 und der Achse 105 der Exzenterwalze 103. An seiner unteren Stirnfläche hat der Exzenter 73 eine zylindrische Ausnehmung 106, in die eine Druckfeder 107 (Fig. 12) aufgenommen ist. An der oberen Stirnfläche hat er einen Innen-Sechskant 108.

In Figur 19 ist eine Ausführung einer Klinke dargestellt, die in ihrem einen Endbereich eine Nase 109, in dem anderen Endbereich eine Bohrung 110 und in einem Mittelbereich eine Erweiterung 111 mit einer um einen Winkel α bezüglich einer Senkrechten zur Verschiebungsachse 112 geneigten Fläche 113 aufweist. Vorzugsweise gilt für die drei in Figur 19 angegebenen Winkel die Beziehung α = β = γ.

Die Klinke nach der speziellen Ausführung gemäss Figur 19 weist zwei aussenseitige symmetrisch zur Achse 112 und auch symmetrisch zur diametralen Querachse der Bohrung 110 ausgebildete Erweiterungen 114, 115 auf, deren Dimensionierung eine schwenkbare Bewegung der Erweiterungen 114, 115 mehrerer Klinken im Raum der Öffnungen 85, 86, 97, 98 in montiertem Zustand gewährleistet.

Die erfindungsgemässe Klemmvorrichtung nach den Figuren 11 bis 19 funktioniert folgendermassen:

Die Feder 81 drückt den Schieber 68 in Längsrichtung nach aussen, während die Feder 107 den Exzenter 73 in Querrichtung nach aussen drückt. Die Exzenterwalze 103 ist drehbar in der lichten Aussparung 72 montiert, die etwa rechteckförmig mit abgerundeten Ecken ausgebildet ist. Beim Drehen des Exzenters 73 wird wegen der Exzentrizität der Exzenterwalze 103 der Schieber 68 in Längsrichtung verschoben. In den Figuren 11 und 12 ist die Klemmvorrichtung im geschlossenen Zustand dargestellt, indem die Klinken durch den Druck der Rampe 100 bzw. 88 gegen die geneigte Fläche 113 (Fig. 19) geschwenkt sind, die Exzenterwalze 103 einen Druck gegen die Bodenpartie 71 des Schiebers im Bereich der Aussparung 72 ausübt und sich die Mantellinie 102 (Fig. 17) in die konkave Seite der bogenförmigen Rippe 84 stützt. In diesem Zustand untergreift die Nase 109 das Profilstück 19 (Fig. 12) und übt einen Klemmdruck gegen eine Partie desselben aus, und der Exzenter 73 ist zwischen der Bohrung 80, der Bodenpartie 71 und der Rippe 84 fest arretiert, so dass sich der Schieber 68 in einer stabilen Lage befindet.

Um die Klemmvorrichtung zu öffnen, wird der Exzenter 73 mit Hilfe eines Sechskant-Schlüssels um ca. 180° gedreht, wodurch die Exzenterwalze 103 beim Drehen den Schieber 68 nach aussen zieht. Bei dieser Bewegung dienen die vorderen Ränder 116 (Fig. 12) der Öffnungen 85, 86, 97, 98, als Anschlag für die Erweiterungen 114,115 der Klinken, die dadurch eine gerade Stellung einnehmen, und die Klemmvorrichtung kann aus dem zweiten Profilstück 19 herausgezogen werden.

Um die Klemmvorrichtung vom ersten Profilstück 1 zu befreien, kann sie in den geschlossenen Zustand gemäss Figur 12 gebracht werden, jedoch vorzugsweise ohne dass die Klinken das zweite Profilstück untergreifen. Denn in diesem Zustand kann der Exzenter 73 gegen die Wirkung der Feder 107 eingedrückt werden, ohne dass die Exzenterwalze 103 gegen die Rippe 84 stösst. Um die Klemmvorrichtung im Profilstück 1 montierbar zu machen, ist die Gesamthöhe des Exzenters 73 kleiner als der Abstand zwischen dem Boden der Vertiefung 89 und der Aussenfläche der Schale 67.

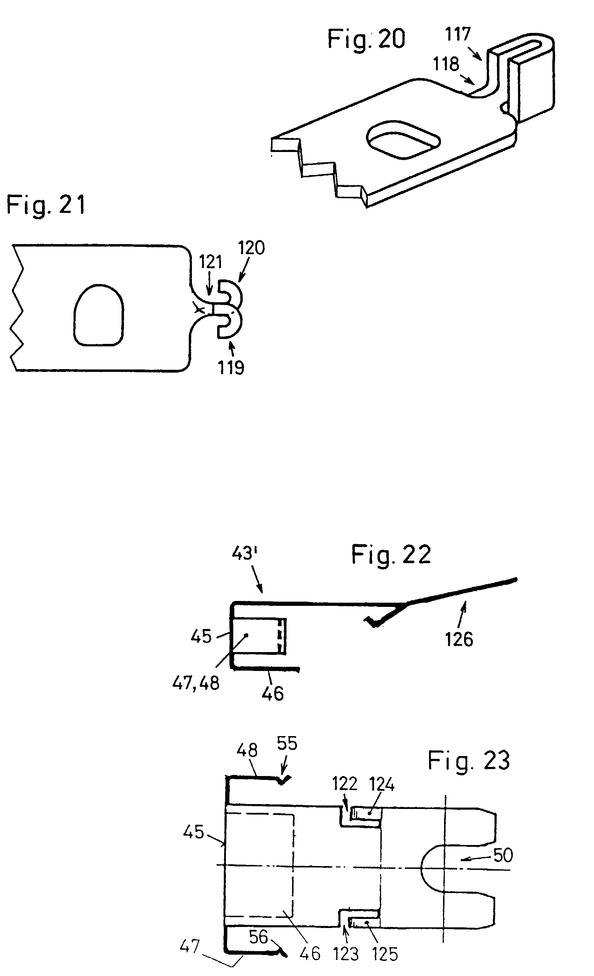

Als Klemmelement kann auch ein L-förmig oder T-förmig ausgebildeter Schieberkopf dienen, der sonst auch als ein sogenannter abgebogener Hammerkopf 117 nach Figur 20 ausgestaltet sein kann.

Die Kupplungspartie des Schiebers nach Figur 20 weist eine mittige Erweiterung 117 auf, die in einem Verfahrensschritt in einem Winkel zwischen 90° und 360° um eine Senkrechte zur Verschiebungsrichtung umgebogen ist, und wobei in einem anderen Verfahrensschritt der Hals 118, der die Erweiterung 117 mit dem Schieber verbindet, um 90° axial in Verschiebungsrichtung gedreht ist.

Die Kupplungspartie des Schiebers nach Figur 21 weist zwei symmetrisch bezüglich der Längsachse angeordnete Erweiterungen 119, 120 auf, von denen in einem Verfahrensschritt die erste in einem Winkel zwischen 90° und 360° in der einen Richtung und die zweite in demselben Winkel in der anderen Richtung um eine Senkrechte zur Verschiebungsrichtung umgebogen sind, und wobei in einem weiteren Verfahrensschritt der Hals 121, der beide Erweiterungen gemeinsam mit dem Schieber verbindet, um 90° axial in Längsrichtung gedreht ist.

Das Verriegelungsblech 43' nach den Figuren 22 und 23, das grundsätzlich der Ausführung nach den Figuren 9 und 10 entspricht, weist jedoch zwei seitliche durch je einen Lförmigen Einschnitt 122 bzw. 123 gebildete Lamellen 124 bzw. 125 auf, die nach unten gebogen sind, und zwar etwa bis in dieselbe Ebene wie die Endpartie 126 des Verriegelungsblechs 43', die dementsprechend nach oben gebogen ist.

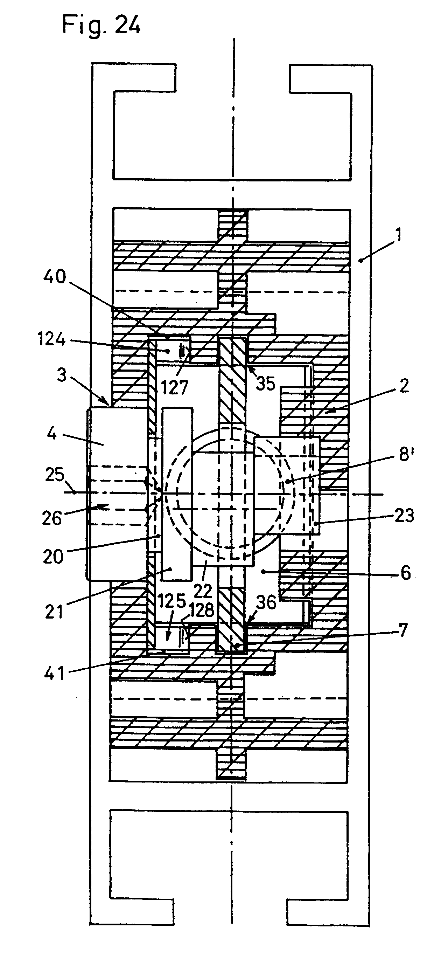

Figur 24 zeigt, dass die Zungen 124 und 125 gegen die anderen Seitenwände 127, 128 der Nuten 40, 41 drücken. In diesem Fall ist es möglich auf die Einbuchtung 33 (Fig. 4) zu verzichten, oder sie durch zwei parallele Schlitze für die fakultative Feder 8' zu ersetzen.

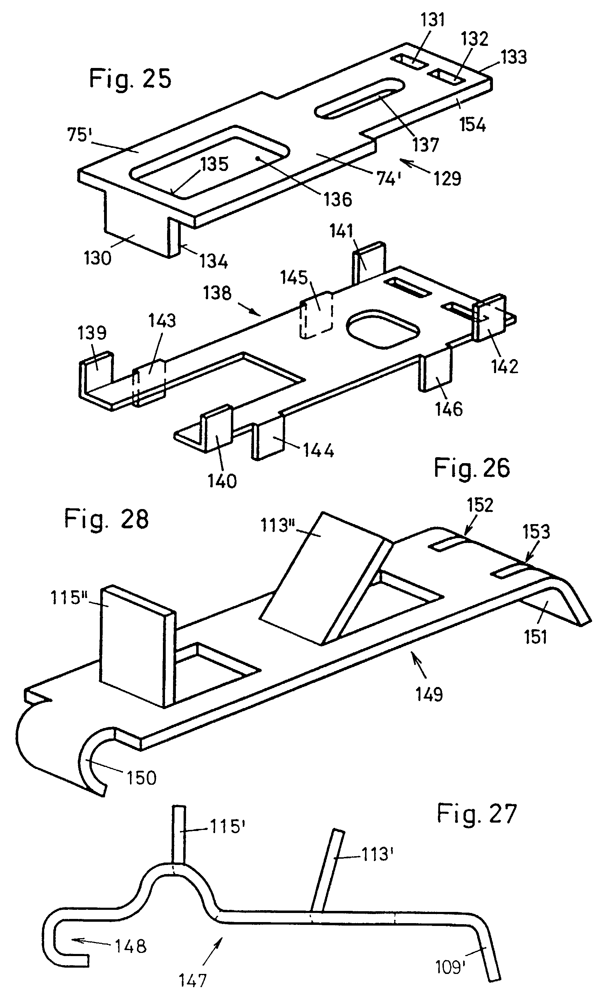

Der Schieber 129 nach Figur 25 ist ein Stanzteil mit einem eingeengten abgewinkelten Ende, das eine Lasche 130 bildet, und mit zwei Schlitzen 131 und 132, die sich im anderen Endbereich des Schiebers 129 befinden und parallel zu dessen schmalen Endkante 133 verlaufen. Die innere Wand 134 der Lasche 130 ist wenigstens in einem mittleren Bereich bündig mit einem Teil der inneren Wand 135 der Aussparung 136, genau wie es bei der Schulter 57 bezüglich der Aussparung 72 (Fig. 11,12) der Fall ist. Die erweiterten Seitenränder 74', 75' des Schiebers 129 (Fig. 25) können durch die Ausnehmungen 92, 93 (Fig. 16) oder durch die Nuten 35, 36 (Fig. 6) geführt sein, wobei im letzten Fall die Lasche 130 entfallen und die Ausnehmung 136 auch eine andere Form haben würde. Gegebenenfalls kann ein mittiges Langloch 137 vorhanden sein, um die zwei Schalen durch eine als Ersatz für die Schrauben 64, 65 (Fig. 11) dienende Schraube zu verbinden.

In weiterer Ausgestaltung der Erfindung kann ein Schieber 138 ein Stanzteil mit vier nach oben abgewinkelten Laschen 139, 140, 141, 142 und vier nach unten abgewinkelten Laschen 143, 144, 145, 146 sein, so dass die Nuten 35, 36 (Fig. 6) oder die Ausnehmungen 92, 93 (Fig. 16) entfallen können, wobei aber dann der Einsatzkern entsprechende Gleitflächen für die Enden der Laschen 139 bis 146 haben muss.

In weiterer Ausgestaltung der Erfindung kann ein Klinkenpaket durch ein als Stanzteil ausgebildetes Haltestück 147 gemäss Figur 27 ersetzt werden. Dieses Haltestück 147 weist ein gebogenes Ende 148, zwei nach aussen gebogene eingeschnittene Laschen 115', 113' und ein abgewinkeltes Ende 109' auf.

Das Ende 148 wird in dem Schlitz 131 oder 132 (Fig. 25) eingeführt. Die Laschen 115' und 113' erfüllen dieselben Funktionen wie die Erweiterung 115 und die Fläche 113 (Fig. 19). Das Ende 109' wirkt in derselben Form wie die Nase 109 (Fig. 19).

Das Haltestück 149 nach Figur 28 mit zwei Laschen 115'', 113'', einem gebogenen Ende 150 und einem abgewinkelten Ende 151 hat zusätzlich zwei Einkerbungen oder Einschnitte 152, 153 im Bereich des Endes 151, um seine Elastizität zu erhöhen.

Die sich aus der unterschiedlichen Form der Ausnehmungen 37 und 38 ergebende Wandung 116 nach Figur 8 und die als Rippe 84 ausgebildete Wandung nach Figur 14 dienen als Stützanschläge zur Verbesserung der Verankerung des Schiebers in einer Klemmlage, so dass dadurch eine grosse Stabilität der Klemmvorrichtung gewährleistet wird.

In Figur 25 stellen die Randpartien 74', 75' den Schieber haltende Tragpartien und der Kupplungsbereich 154 eine Randpartie des Schiebers dar, die die Klemmelemente oder Haltestücke trägt. Solche Tragpartien bilden zugleich einen Rand beispielsweise für die Lochungen 12 (Fig. 2), 72 (Fig. 11) oder 131, 132 bzw. 136 (Fig. 25).

## Patentansprüche

1. Klemmvorrichtung zum lösbaren Verbinden zweier Profilstücke (1; 19), wobei in einem ersten der Profilstücke (1) ein Einsatzkern (2; 61) einfügbar und fixierbar ist, der einen axial beweglichen Schieber mit einem Endteil trägt, um ein Klemmelement zu verschieben, das mindestens teilweise in eine Öffnung des zweiten Profilstücks (19) einfügbar ist, um einen Klemmdruck gegen eine Partie des zweiten Profilstücks auszuüben, die die Öffnung teilweise abschliesst, wobei der Einsatzkern (2; 61) Aussenwände aufweist und durch eine dieser Aussenwände hindurch Drehmittel vorhanden sind, um über ein System von Gleitflächen, die in den Schieber eingreifen, diesen axial zu verschieben, dadurch gekennzeichnet, dass der Einsatzkern (2; 61) mindestens teilweise zwei breite und zwei schmale Aussenwände aufweist, dass die Drehmittel durch eine der breiten Aussenwände hindurch greifend angeordnet sind, dass der Schieber zwei einander gegenüberliegende Randpartien (74, 75; 74', 75'; 154) aufweist, die flach und plattenförmig ausgebildet ist, und dass der Einsatzkern (2; 61) über zwei längliche seitliche Gleitflächen verfügt, die als Führung für diese zwei flachen Randpartien (74, 75; 74', 75'; 154) des Schiebers ausgebildet sind.

2. Klemmvorrichtung nach Anspruch 1, dadurch gekennzeichnet, dass in der ersten breiten Aussenwand eine zum Kopf eines Exzenters (5; 73) passende Bohrung (3; 80) vorhanden ist, dass der Schieber eine Aussparung (12; 72) und eine zur Verschiebung des Schiebers ins Innere des Einsatzkerns mit einer Exzenterwalze (22; 103) des Exzenters zusammenwirkende Wand (30; 57) aufweist, und dass der Schieber zwei äussere flache parallele Randpartien aufweist, die von länglichen Gleitflächen des Einsatzkerns (2) geführt werden.

3. Klemmvorrichtung nach Anspruch 1 oder 2, dadurch gekennzeichnet, dass der drehbar in der Bohrung (3) dieser ersten Aussenwand des Einsatzkerns (2) angeordnete Kopf (4) des Exzenters (5) einen Durchmesser aufweist, der grösser als der Nenndurchmesser der Exzenterwalze (22) ist, wobei ein federndes im inneren Hohlraum des Einsatzkerns (2) auf die Innenseite dieser Aussenwand gleitend angeordnetes Verriegelungsblech (43) eine gabelartige Öffnung (50) aufweist, in die über eine Einschnürung (20) der Exzenter (5) verschiebbar eingefügt ist, und wobei die Ränder dieses Verriegelungsblechs (43) im Bereich dieser gabelartigen Öffnung (50) durch Federdruck den Exzenter (5) durch die Bohrung (3) dieser Aussenwand herausdrücken.

4. Klemmvorrichtung nach Anspruch 2 oder 3, dadurch gekennzeichnet, dass die durchgehende Aussparung (12) des Schiebers (7) unsymmetrisch ist und teilweise durch zwei zumindest angenähert senkrecht zur Längsachse des Schiebers verlaufende Randwände (27, 28), eine parallel zu dieser Längsachse verlaufende Randwand (29) und eine Randwand (30) begrenzt ist, die im Bereich nahe dem das Klemmelement umfassenden Endteil des Schiebers bogenförmig und im gegenüberliegenden Bereich schräg ausgebildet ist.

5. Klemmvorrichtung nach Anspruch 4, dadurch gekennzeichnet, dass der Exzenter (5) eine neben der Exzenterwalze (22) koaxial mit dem Exzenterkopf (4) angeordnete Exzenteranschlagwalze (23) aufweist, die in eine runde Ausnehmung (37) der zweiten breiten Aussenwand des Einsatzkerns (2) passt.

6. Klemmvorrichtung nach Anspruch 5, dadurch gekennzeichnet, dass diese runde Ausnehmung (37) mit einer weiteren einem zumindest angenähert halbmondförmigen Querschnitt aufweisenden Ausnehmung (38) kommuniziert, und dass die Exzenteranschlagwalze (23) einen zumindest angenähert halbmondförmigen Querschnitt aufweist, derart, dass in einer geeigneten Drehlage die Exzenteranschlagwalze (23) in diese weitere Ausnehmung (38) einfügbar ist.

7. Klemmvorrichtung nach einem der Ansprüche 1 oder 2, dadurch gekennzeichnet, dass der drehbar in der Bohrung (80) dieser ersten Aussenwand (91) des Einsatzkerns angeordnete Exzenterkopf des Exzenters (73) einen Durchmesser aufweist, der kleiner als der Nenndurchmesser der Exzenterwalze (103) des Exzenters (73) ist, und dass der Exzenter an dessen einer Stirnfläche eine zylindrische Ausnehmung (106) aufweist, in die eine Druckfeder (107) aufgenommen ist, die den Exzenter (73) nach aussen drückt.

8. Klemmvorrichtung nach einem der Ansprüche 1 bis 7, dadurch gekennzeichnet, dass die länglichen Gleitflächen durch Wände in Nuten (35, 36) oder schlitzförmige Öffnungen (92, 93) an mindestens einer der Aussenwände des Einsatzkerns gebildet sind.

9. Klemmvorrichtung nach einem der Ansprüche 1 bis 8, dadurch gekennzeichnet, dass der Schieber (7; 68) eine gegenüber der flach ausgebildeten Randpartie um 90° axial gedrehte Kupplungspartie (9; 118; 121) aufweist, die zur Halterung des Klemmelements (15, 16; 117; 119, 120) dient, und/oder dass die flach und plattenförmig ausgebildete Randpartie (154) des Schiebers mindestens einen lichten Schlitz (131, 132) zur Halterung eines als Stanzteil ausgebildeten Klemmelements (147) aufweist.

## Claims

1. Clamping device for detachably connecting two profiled parts (1; 19), it being possible for a first profiled part (1) to have inserted and secured in it an insert core (2; 61) which bears an axially movable slide with an end part in order to displace a clamping element, which can at least partially be inserted into an opening in the second profiled part (19), in order to exert clamping pressure against a portion of the second profiled part, which portion partially closes the-opening, the insert core (2; 61) having outer walls and rotating means being provided through one of these outer walls in order, via a system of sliding surfaces which engage in the slide, axially to displace the said slide, characterized in that the insert core (2; 61) has at least partially two wide and two narrow outer walls, in that the rotating means are arranged such that they engage through one of the wide outer walls, in that the slide has two mutually opposite border portions (74, 75; 74', 75'; 154) which are designed such that they are flat and in the form of a plate, and in that the insert core (2; 61) has two elongated, lateral sliding surfaces which are designed as a guide for these two flat border portions (74, 75; 74', 75'; 154) of the slide.

2. Clamping device according to Claim 1, characterized in that the first, wide outer wall is provided with a bore (3; 80) which matches the head of an eccentric (5; 73), in that the slide has a cutout (12; 72) and a wall (30; 57) which interacts with an eccentric roller (22; 103) of the eccentric to displace the slide into the interior of the inert core, and in that the slide has two outer, flat, parallel border portions which are guided by elongated sliding surfaces of the insert core 12).

3. Clamping device according to Claim 1 or 2, characterized in that the head (4) of the eccentric (5), which head is arranged rotatably in the bore (3) in this first outer wall of the insert core (2), has a diameter which is larger than the nominal diameter of the eccentric roller (22), a resilient locking plate (43), which is arranged such that it slides onto the inside of this outer wall in the inner cavity of the insert core (2), having a fork-like opening (50) into which, via a constriction (20), the eccentric (5) is displaceably inserted, and the borders of this locking plate (43) exerting spring pressure in the region of this fork-like opening (50) to push the eccentric (5) through the bore (3) in this outer wall.

4. Clamping device according to Claim 2 or 3, characterized in that the continuous cutout (12) in the slide (7) is asymmetrical and is bounded partially by two border walls (27, 28) running at least approximately perpendicularly with respect to the longitudinal axis of the slide, by a border wall (29) running parallel to this longitudinal axis, and by a border wall (30) which is designed such that it is arcuate in the region near to that end part of the slide which surrounds the clamping element, and such that it is oblique in the opposite region.

5. Clamping device according to Claim 4, characterized in that the eccentric (5) has an eccentric stop roller (23) which is arranged next to the eccentric roller (22) coaxially with the eccentric head (4) and fits into a round recess (37) in the second, wide outer wall of the insert core (2).

6. Clamping device according to Claim 5, characterized in that this round recess (37) communicates with a further recess (38), which has an at least approximately crescent-shaped cross-section, and in that the eccentric stop roller (23) has an at least approximately crescent-shaped cross-section such that the eccentric stop roller (23) can be inserted, at a suitable rotary position, into this further recess (38).

7. Clamping device according to either of Claims 1 or 2, characterized in that the eccentric head of the eccentric (73), which head is arranged rotatably in the bore (80) in this first outer wall (91) of the insert core, has a diameter which is smaller than the nominal diameter of the eccentric roller (103) of the eccentric (73), and in that one of the end faces of the eccentric has a cylindrical recess (106) in which is held a compression spring (107) which presses the eccentric (73) outwards.

8. Clamping device according to one of Claims 1 to 7, characterized in that the elongated sliding surfaces are formed by walls in grooves (35, 36) or slot-shaped openings (92, 93) on at least one of the outer walls of the insert core.

9. Clamping device according to one of Claims 1 to 8, characterized in that the slide (7; 68) has a coupling portion (9; 118; 121) which is axially rotated through 90° with respect to the border portion of flat design and serves for supporting the clamping element (15, 16; 117; 119, 120), and/or in that that border portion (154) of the slide which is designed such that it is flat and is in the form of a plate has at least one clear slot (131, 132) for supporting a clamping element (147) designed as a punched part.

## Revendications

1. Dispositif de serrage pour l'assemblage démontable de deux pièces profilées (1;19), dans lequel dans une première des pièces profilées (1) peut être inséré et fixé un noyau formant insert (2;61), qui porte, sur une partie d'extrémité, un poussoir déplaçable axialement de manière à déplacer un élément de serrage qui peut être serré au moins en partie dans une ouverture de la seconde pièce profilée (19), pour appliquer une pression de serrage à une partie de la seconde pièce profilée, qui ferme partiellement l'ouverture, et dans lequel le noyau formant insert (2;61) possède des parois extérieures, et des moyens d'entraînement en rotation sont présents à travers l'une de ces parois extérieures pour déplacer le poussoir par l'intermédiaire d'un système de surfaces de glissement, qui s'engage dans le poussoir, caractérisé en ce que le noyau formant insert (2;61) comporte au moins en partie deux parois extérieures larges et deux parois extérieures étroites, que les moyens d'entraînement en rotation sont disposés de manière à s'engager à travers l'une des deux parois extérieures larges, que le poussoir comporte deux parties de bord (74, 75; 74', 75'; 154), qui sont situées en vis-à-vis l'une de l'autre et qui sont plates et ont une forme de plaque, et que le noyau formant insert (2;61) comporte deux surfaces de glissement latérales allongées, qui sont agencées sous la forme d'un guide pour ces parties de bord plates (74, 75; 74', 75'; 154) du poussoir.

2. Dispositif de serrage selon la revendication 1, caractérisé en ce que dans la première paroi extérieure large est présent un perçage (3;80) qui est adapté à la tête d'un excentrique (5;73), que le poussoir comporte un évidement (12;72) et une paroi (30;57) coopérant pour déplacer le poussoir à l'intérieur du noyau formant insert, avec un cylindre (22;103) de l'excentrique, et que le poussoir possède deux parties de bord parallèles planes extérieures, qui sont guidées par des surfaces de glissement allongées du noyau formant insert 12).

3. Dispositif de serrage selon la revendication 1 ou 2, caractérisé en ce que la tête (4) de l'excentrique (5), qui est disposée de manière à pouvoir tourner dans le perçage (3) de cette première paroi extérieure du noyau formant insert (2), possède un diamètre qui est supérieur au diamètre nominal de l'arbre (22) de l'excentrique, et dans lequel une tôle élastique de verrouillage (43), qui est disposée dans la cavité intérieure du noyau d'insertion (2) de manière à pouvoir glisser sur la face intérieure de cette paroi extérieure, possède une ouverture en forme de fourche (50), dans laquelle l'excentrique (5) est inséré de manière à être déplaçable par l'intermédiaire d'une partie rétrécie (20), et dans lequel dans la zone de cette ouverture en forme de fourche (50), les bords de cette tôle de verrouillage (43) repoussent l'excentrique (5), sous la pression d'un ressort, à travers le perçage (3) de cette paroi extérieure.

4. Dispositif de serrage selon la revendication 2 ou 3, caractérisé en ce que l'ouverture traversante (12) du poussoir (7) est dissymétrique et est délimitée en partie par deux parois de bord (27,28), qui s'étendent au moins approximativement perpendiculairement à l'axe longitudinal du poussoir, par une paroi de bord (29) qui s'étend parallèlement à cet axe longitudinal et par une paroi de bord (30), qui possède une forme arquée dans la zone voisine de l'élément d'extrémité du poussoir, qui entoure l'élément de serrage, et est oblique dans la zone située en vis-à-vis.

5. Dispositif de serrage selon la revendication 4, caractérisé en ce que l'excentrique (5) possède un cylindre de butée (23) disposé à côté du cylindre (22) de l'excentrique, coaxialement à la tête (4) de l'excentrique et qui est monté dans un évidement circulaire (37) de la seconde paroi large du noyau formant insert 12).

6. Dispositif de serrage selon la revendication 5, caractérisé en ce que cet évidement circulaire (37) communique avec un évidement (38), qui possède une section transversale au moins approximativement en forme de croissant, et que le cylindre de butée (23) de l'excentrique possède une section transversale au moins approximativement en forme de croissant, de telle sorte que dans une position de rotation appropriée, le cylindre de butée (23) de l'excentrique peut être inséré dans cet autre évidement (38).

7. Dispositif de serrage selon l'une des revendications 1 ou 2, caractérisé en ce que la tête de l'excentrique (73), qui est disposée de manière à pouvoir tourner dans le perçage (80) de cette première paroi extérieure (91) du noyau formant insert, possède un diamètre qui est inférieur au diamètre nominal du cylindre (103) de l'excentrique (73), et que l'excentrique possède, au niveau de l'une de ses faces frontales, un évidement cylindrique (106), dans lequel est logé un ressort de pression (107), qui repousse l'excentrique (73) vers l'extérieur.

8. Dispositif de serrage selon l'une des revendications 1 à 7, caractérisé en ce que les surfaces de glissement allongées sont formées par des parois présentes dans des gorges (35,36) ou dans des ouvertures en forme de fentes (92,93) formées au moins dans l'une des parois extérieures du noyau formant insert.

9. Dispositif de serrage selon l'une des revendications 1 à 8, caractérisé en ce que le poussoir (7;68) comporte une partie d'accouplement (9; l18; 121), qui est pivotée axialement de 90° par rapport à la partie de bord de forme plate et qui sert à retenir l'élément de serrage (15, 16; l17; l19, 120), et/ou que la partie de bord (154) plate et agencée en forme de plaque du poussoir comporte au moins une fente ouverte (131,132) servant à retenir un élément de serrage (147) agencé sous la forme d'une pièce découpée.
